# EUROPÄISCHE PATENTSCHRIFT

(11) **EP 1 591 699 B1**
(45) Veröffentlichungstag und Bekanntmachung des Hinweises auf die Patenterteilung: **14.09.2016**
(21) Anmeldenummer: 05001288.9
(22) Anmeldetag: 22.01.2005
(51) Int. Cl.: F16J 15/3244

(54) **Anordnung mit einem Gehäuse, einer Welle und einem Radialwellendichtring**
Arrangement with a housing, a shaft and a radial shaft seal
Arrangement avec un carter, un arbre et un joint à lèvre radiale

(30) Priorität: 28.04.2004 DE 102004020966
(43) Veröffentlichungstag der Anmeldung: 02.11.2005
(73) Patentinhaber: Carl Freudenberg KG, 69469 Weinheim (DE)
(72) Erfinder: Bock, Eberhard, 69509 Mörlenbach (DE); Vogt, Rolf, 68723 Oftersheim (DE); Sattler, Holger, 69483 Wald-Michelbach (DE)

(56) Entgegenhaltungen:
- WO-A-02/04846
- US-A- 4 739 998
- US-A- 5 791 658
- US-B1- 6 715 768

## Beschreibung

Die Erfindung betrifft eine Anordnung mit einem Gehäuse, einer Welle und einem Radialwellendichtring mit einem Stützring und einem daran durch Vulkanisation angefügten Dichtelement aus einem elastomeren Werkstoff, das eine Dichtlippe hat, die bei nicht eingebautem Dichtring in radialer Richtung vom Stützring absteht und in eine Gehäuseöffnung eingebaut unter Vorspannung mit seiner abgewinkelten Dichtfläche die Welle umfasst.

### Technisches Gebiet

Dichtringe dieser Art sind weit verbreitet und werden eingesetzt, um einen mit einer Flüssigkeit gefüllten Innenraum gegenüber der Umgebung abzudichten. Dabei soll die Abdichtung sowohl statisch bei stillstehender Welle als auch dynamisch bei rotierender Welle eine gute Abdichtung ergeben. Eine Leckage soll weitgehend vermieden werden. Darüber hinaus sollen die Dichtungen auch bei unterschiedlichen Drehrichtungen der Welle dicht sein.

### Stand der Technik

Eine Möglichkeit für eine Abdichtung einer Welle, die in beiden Richtungen drehen kann, ist in der US PS 4,834,397 gezeigt. Unter anderem wird dort in der Figur 4 eine Ausführung gezeigt, bei der als Dichtlippe relativ harte Fluorkunststoffe eingesetzt werden, wie beispielsweise Polytetrafluorethylen, wobei die Dichtlippe in entsprechende Halterungen eingespannt ist. Die an der Welle anliegende Dichtfläche ist durch eine Nut unterteilt, so dass zwei wulstartige Dichtflächen entstehen. Dabei ist vorgesehen, dass die zum Innenraum gerichtete erste Dichtfläche mit einer geringeren Kraft an die Welle angepresst wird als die außen liegende Dichtfläche. Darüber hinaus ist die umlaufende Nut so ausgebildet, dass sie zur ersten Dichtfläche eine scharfe Kante und zur zweiten Dichtfläche hin eine abgewinkelte Kante bildet. Die Herstellung einer solchen Dichtung ist sehr aufwendig und erfordert eine sehr hohe Präzision und zwar sowohl bezüglich des verwendeten Materials als auch ihrer räumlichen Ausgestaltung.

Eine mit der voranstehend beschriebenen Ausführungsform vergleichbare Dichtung zeigt die EP 0 798 498 A1. Dort ist ebenfalls die Dichtfläche durch eine umlaufende Nut unterbrochen, so dass zwei Teildichtflächen vorhanden sind. Abweichend von der vorstehend behandelten Ausführungsform ist hier die Nut in entgegengesetzter Richtung abgeschrägt und außerdem ist die Abschlussfläche der Dichtlippe mit einer Anphasung versehen. Der Nutboden ist mit einer Wellung ausgestattet, die beim Einsetzen der Drehbewegung ein Abheben der ersten Dichtfläche von der Oberfläche der Welle bewirkt, mit der Folge, dass die Leckageflüssigkeit zurück gefördert wird. In den gezeigten Beispielen wird auch hier eine Dichtlippe aus PTFE verwendet. Eine solche Dichtung lässt beide Drehrichtungen für die abzudichtende Welle zu.

Eine weitere Möglichkeit der Wellenabdichtung ist der DE 100 33 446 C2 (WO 02/04846 A1) zu entnehmen. Hier wird ein Wellendichtring aus einem Elastomerwerkstoff verwendet, bei dem die Dichtlippe wellenseitig mit einem Gewinde versehen ist, welches austretendes Medium bei drehender Welle zum abzudichtenden Raum hin zurückfördert. Um auch bei stillstehender Welle eine statische Abdichtung zu erreichen, ist das Gewinde zur Umgebung hin durch einen Steg abgesperrt. Das Gewinde ist beiderseits des Steges vorhanden. Eine Umkehr der Wellendrehrichtung wird in dem Dokument nicht angesprochen. Eine solche Ausführungsform würde auch nur für kurze Zeit ein gegenläufiges Drehen der Welle zulassen, da bei einer längeren Rückwärtsdrehung der Welle beträchtliche positive und negative Drücke am Steg entstehen und größere Mengen an Leckageflüssigkeit austreten können. Des Weiteren kann mit solchen Ausführungsformen nicht gegen Druck abgedichtet werden. Die Patentschrift US 6,715,768 B1 behandelt eine Radialwellendichtung bei der eine Dichtscheibe vorzugsweise aus PTFE verwendet wird.
Bei Dichtscheiben dieser Art, auch bei vergleichbarem Material, besteht das Problem einer stabilen Befestigung der Scheibe an dem Stützring. Zur Lösung des Problems wird eine Zwischenschicht zwischen Stützring und Dichtscheibe eingefügt, welche gleichermaßen eine Verbindung sowohl zum Stützring als auch zur Dichtscheibe ergibt. Die Auswahl der Materialkomponenten und die Durchführung der Verbindungsvorgänge ist jedoch aufwendig.

Schließlich zeigt das US Patent 4,739,998 eine Wellendichtung, bei der eine Dichtscheibe in einer Hülle gehalten wird Die Dichtscheibe ist exzentrisch ausgebildet und hat mehrere konzentrische Rillen, die durch Kontaktfläche voneinander separiert sind.
Durch die elliptische Ausbildung der Dichtscheibe und gewisse Unrundungen an der Welle entsteht eine Pumpwirkung, welche Lackageflüssigkeit bei wechselnden Drehrichtungen zurückführt. Die Abrasion einer solchen Dichtung ist hoch, so dass sie keine längere Laufzeit hat.

### Darstellung der Erfindung

Der Erfindung liegt die Aufgabe zu Grunde, einen verbesserten Radialwelledichtring zu schaffen, der eine gute Abdichtung auch über längere Zeit ergibt und zumindest für einen begrenzten Zeitraum auch einer Umkehr der Wellendrehrichtung stand hält Außerdem soll die Dichtung auch für höhere Drücke geeignet sein.

Die Lösung der gestellten Aufgabe wird mit den Merkmalen des Anspruchs 1 erreicht.

Bei dem Radialwellendichtring gemäß der Erfindung wird an der Dichtlippe eine Dichtfläche gebildet, die aus einer am Ende der Dichtlippe angebrachten und die Welle umfassenden Dichtwulst und einem daran anschließenden, die Leckageflüssigkeit zurück haltenden oder zurück fördernden Oberflächenabschnitt besteht, wobei die Abschlussfläche der Dichtlippe bei eingebautem Dichtelement zum abzudichtenden Innenraum des Gehäuses gerichtet ist. Durch die Dichtwulst wird eine gute statische Abdichtung bei stehender Welle erzielt. Durch den unmittelbar an die Dichtwulst anschließende Oberflächenabschnitt wird die Leckageflüssigkeit zurück gehalten bzw. zurück gefördert. Dabei ist es von Bedeutung, dass die Abschlussfläche der Dichtlippe bei eingebautem Dichtelement zum abzudichtenden Innenraum des Gehäuses gerichtet ist.

Um die Zurückhaltung bzw. Zurückförderung der Leckageflüssigkeit durch den Oberflächenabschnitt zu erreichen, ist dieser mit hydrodynamisch wirkenden Rückförderrillen für die Leckageflüssigkeit versehen. Dabei ist es zweckmäßig, wenn die Rückförderrillen durch ein nur eingängiges Gewinde gebildet sind, wobei dieses Gewinde über eine längere Strecke stetig abflachend in der Dichtwulst ausläuft. Die Auslaufstrecke sollte mindestens ¼ des Umfangs der Dichtwulst betragen.

Das Gewinde kann ein dreiseitiges Spitzgewinde sein. Gute Ergebnisse wurden auch mit Gewinden erzielt, die sägezahnartig mit nach innen gerichteten Schneidspitzen ausgebildet sind. Die Vorderfront der Zähne liegt dann etwa senkrecht zur Mittelebene der Dichtlippe.

Durch das in der Dichtwulst auslaufende Gewinde des Oberflächenabschnitts erhält die Dichtwulst eine unterschiedliche Berührbreite, mit der sie an der Welle anliegt. Es ist darauf zu achten, dass diese Berührbreite an ihrer engsten Stelle 0,1 bis 0,8 mm beträgt. Kleinere Berührbreiten können zu einer ungenügenden Abdichtung führen, während zu große Berührbreiten die Schmierung behindern können.

Die Dralltiefe des Gewindes wird mit Bezug zur Dichtlippendicke in einem Bereich von 0,46 bis 0,67 der Dichtlippendicke gewählt. Das Verhältnis der Dichtlippendicke zur Dralltiefe des Gewindes beträgt dann 1,5 bis 2,2. Dabei ist darauf zu achten, dass die Berührbreite der Dichtwulst im umgekehrten Verhältnis zur Dralltiefe steht, so dass der kleineren Berührbreite die größere Dralltiefe und der größeren Berührbreite die kleinere Dralltiefe zugeordnet wird.

Um zu verhindern, dass Schmutzteile oder Ähnliches aus dem Innenraum unter die Dichtwulst gelangen, ist die Abschlussfläche der Dichtlippe zur Oberfläche der Welle so ausgerichtet, dass sie einen Winkel α bildet, der zwischen 80° und 100° beträgt. Auf der Außenseite entsteht bei eingebautem Dichtelement an der Dichtlippe ein Winkel β zwischen 0° und 20°.

Vom Einfluss auf die Abdichtwirkung ist des weiteren die Überdeckung der Dichtfläche auf der Welle. In Versuchen wurde ermittelt, dass man beste Ergebnisse erzielt, wenn die Überdeckung (ØD-ØB) etwa 3% bis 10% des Wellendurchmessers beträgt. In vielen Anwendungsgebieten, bei denen der Wellendurchmesser 45 mm beträgt, wird eine Überdeckung von 2 bis 5 mm gewählt.

Vorteilhaft ist ein Versatz C der Mittellinie der Dichtlippe 4 zur Mittellinie der Welle 6. Duch den Versatz ergeben sich örtlich unterschiedliche Anpressungen der Dichtlippe 4 auf der Welle 6 und eine über den Umfang der Welle 6 versetzte, sinusförmig verlaufende Kante 7, was zu einem deutlich besseren Schmierstoffaustausch führt.

Der Dichtring wird mit einem üblichen Stützring versehen. Bevorzugt wird der Stützring jedoch aus einem abgewinkelten Metallring gebildet, dessen äußerer axial auslaufender Ringteil zumindest teilweise von dem elastomeren Werkstoff des Dichtelements umfasst ist und als Klemm- bzw. statischer Dichtring in das Gehäuse eingefügt ist und dessen innerer, radial ausgerichteter Ringteil an seinem innen liegenden Rand vom Werkstoff des Dichtelements eingefasst ist.

### Kurzbeschreibung der Zeichnungen

Anhand der in den Zeichnungen dargestellten Ausführungsbeispiele wird die Erfindung nachstehend näher erläutert.

Es zeigen:
- Figur 1:: in vergrößerter Darstellung die prinzipielle Ausführungsform der Dichtlippe an einer Welle anliegend,
- Figur 2:: den Radialwellendichtring vor dem Einbau im Schnitt ,
- Figur 3:: die Dichtlippe vergrößert und
- Figur 4:: eine Innenansicht eines Dichtlippensegments mit in der Dichtwulst auslaufendem Gewinde.

### Ausführung der Erfindung

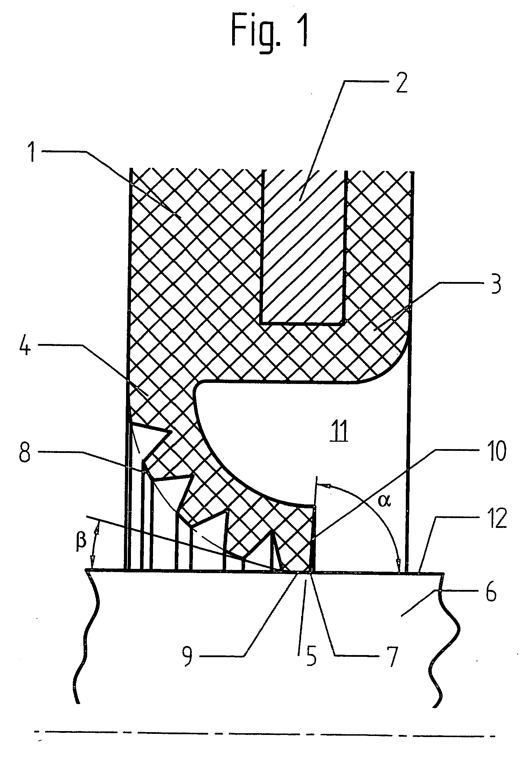

In der Figur 1 ist schematisch ein Teil des Radialwellendichtrings 1 im Schnitt gezeigt. An dem Stützring 2 ist das Dichtelement 3 anvulkanisiert. Das Dichtelement 3 besteht aus einem weichen elastomeren Werkstoff und es hat die Dichtlippe 4, die eingebaut unter eigener elastischer Vorspannung mit ihrer Dichtfläche 5 die Welle 6 umfasst. Die Dichtfläche 5 wird durch die Wulst 7 und einen auf der Außenfläche 8, d.h. auf der nach außen gerichteten Seite der Dichtlippe 4 vorhanden kurzen Oberflächenabschnitt 9 gebildet. Dabei ist die Abschlussfläche 10 der Dichtlippe 4 zum abzudichtenden Innenraum 11 eines nicht näher dargestellten Gehäuses gerichtet. Die Abschlussfläche 10 der Dichtlippe 4 nimmt dabei zur Oberfläche 12 der Welle 6 einen Winkel α ein, der etwa 87° beträgt. Dieser Winkel α ist größer als der Winkel β, der zwischen der nach außen gerichteten Fläche 8 der Dichtlippe 4 und der Wellenoberfläche 12 entsteht. Der Winkel β beträgt im Ausführungsbeispiel ca. 15°. Eine solche Dichtung hält auch höheren Innendrücken stand, da bei steigendem Druck die Wulst 7 stärker an die Welle 6 angedrückt wird.

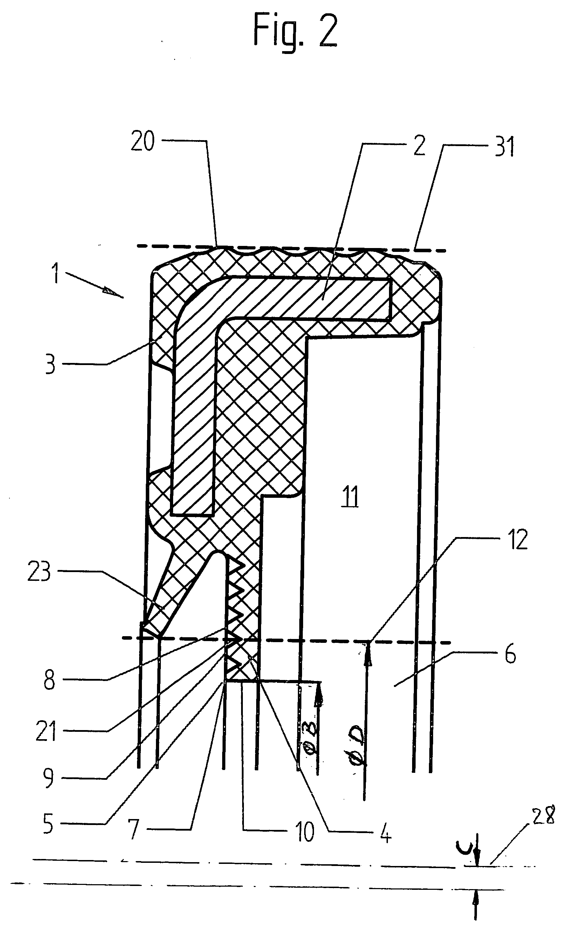

In der Figur 2 ist ein Radialwellendichtring 1 im Schnitt gezeigt, im nicht eingebauten Zustand. Am Stützring 2 ist das Dichtelement 3 anvulkanisiert, das mit seinem Außenumfang 20 sowohl als Abdichtung gegenüber einem nicht näher gezeigten Gehäuse 31 als auch zur Abdichtung gegenüber der ebenfalls nur gestrichelt eingezeichneten Welle 6 dient. Zur Abdichtung an der Welle 6 hat das Dichtelement 3 die Dichtlippe 4. Die Dichtlippe 4 hat eine die Welle 6 rundum umfassenden Dichtwulst 7. Hieran schließt der Oberflächenabschnitt 9 an, der in diesem Ausführungsbeispiel durch Rückförderrillen 21 eines eingängigen Gewindes gebildet ist. Das Gewinde hat nach innen gerichtete Schneidspitzen 22. Außerdem ist das Dichtelement 3 noch mit der Staublippe 23 versehen. Der Durchmesser D der Welle 6 und der Innendurchmesser B der Dichtlippe 4 werden so aufeinander abgestimmt, dass bei eingebautem Dichtring 1 eine Dichtfläche 5 aus der Dichtwulst 7 und dem Oberflächenabschnitt 9 entsteht, wobei der Oberflächenabschnitt 9 mindestens einen Gewindegang hat. Eingezeichnet ist auch ein gewollter Versatz C der Mittellinie 28 der Dichtlippe 4 und der Mittellinie 29 der Welle 6. Durch diesen Versatz ergeben sich örtlich unterschiedliche Anpressungen der Dichtlippe 4 auf der Welle 6 und eine über den Umfang der Welle 6 versetzte, sinusförmig verlaufende Kante 7, was zu einem deutlich besseren Schmierstoffaustausch führt.

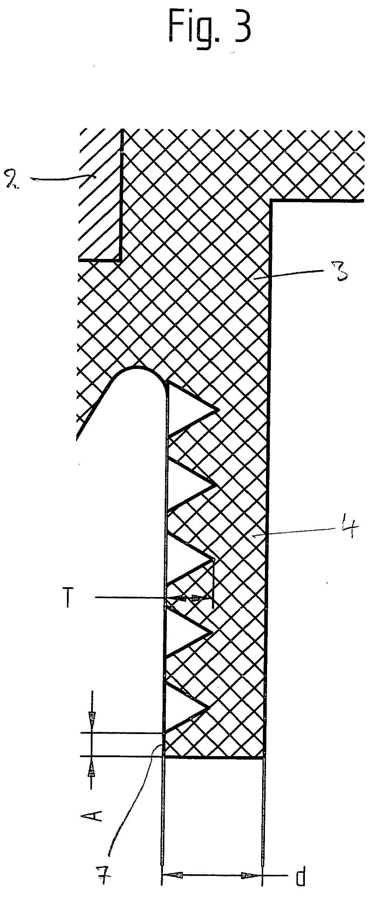

Die Figur 3 zeigt eine vergrößerte Dichtlippe 4, um die gegebenen Verhältnisse von Dichtlippendicke d, Dralltiefe T und der Berührbreite A der Dichtwulst 7 aufzuzeigen. Die Berührbreite A wird an der engsten Stelle 25 der Dichtwulst 7 gemessen, die am Auslauf des Gewindes 24 in der Dichtwulst 7 liegt. Die minimale Berührbreite A wird in Abhängigkeit vom Wellendurchmesser D und den Betriebsbedingungen festgelegt und beträgt 0,1 - 0,8 mm. Die Dralltiefe T des Gewindes 24 wird in Bezug zur Dichtlippendicke d gewählt und beträgt 0,46 bis 0,67 der Dichtlippendicke d. Dabei steht die Berührbreite A der Dichtwulst 7 im umgekehrten Verhältnis zur Dralltiefe T, das heißt, dass der kleineren Berührbreite A die größere Dralltiefe T zugeordnet ist und umgekehrt der größeren Berührbreite A die kleinere Dralltiefe T.

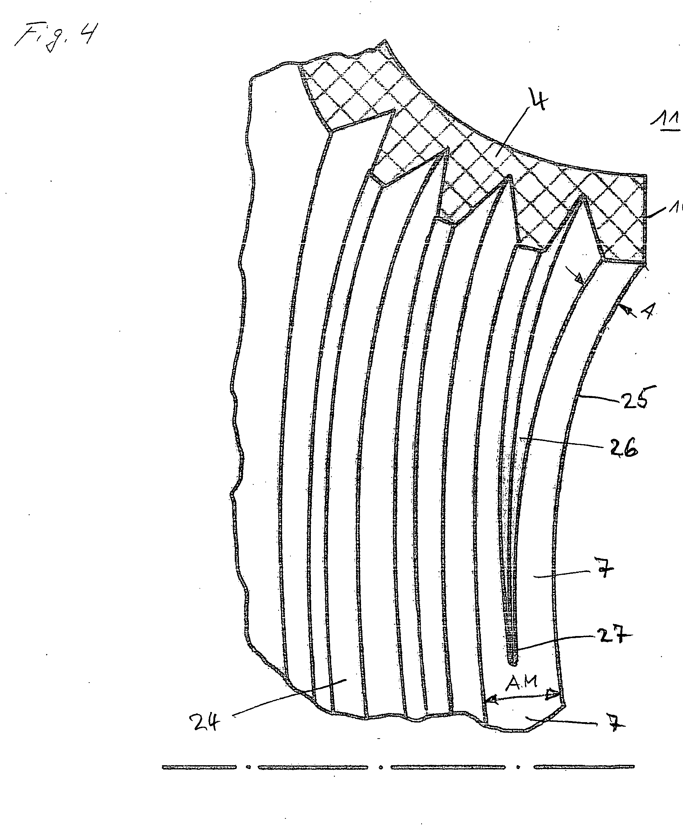

Die Figur 4 zeigt in der Innenansicht vergrößert die Ausbildung des Gewindeauslaufs 26 in der Wulst 7. Der Gewindeauslauf 26 erstreckt sich über 0,25 bis 0,5 des Umfangs der Dichtwulst 7, so dass eine möglichst lange Strecke für den Auslauf 26 zur Verfügung steht. Dadurch wird die Rückförderung der Leckageflüssigkeit bei drehender Welle 6 begünstigt. Für die Dichtwulst 7 ist die Mindestberührbreite A einzuhalten. Durch den Auslauf 26 des Gewindes 24 in der Wulst 7 entsteht am Auslaufende 27 des Gewindes 24 eine breitere Berührbreite AM.

## Patentansprüche

1. Anordnung mit einem Gehäuse (31), einer Welle (6) und einem Radialwellendichtring (1) mit einem Stützring (2) und einem daran durch Vulkanisation angefügten Dichtelement (3) aus einem elastomeren Werkstoff, das eine Dichtlippe (4) mit einem eingängigen Gewindes (24) als Rückförderrillen (21) hat, wobei die Dichtlippe (4) bei nicht eingebautem Dichtring (1) in radialer Richtung vom Stützring (2) absteht und in eine Gehäuseöffnung eingebaut unter Vorspannung mit ihrer abgewinkelten Dichtfläche (5) die Welle (6) umfasst, wobei die Abschlussfläche (10) der Dichtlippe (4) bei eingebautem Dichtelement (3) zum abzudichtenden Innenraum (11) des Gehäuses gerichtet ist, **dadurch gekennzeichnet, dass** die Dichtfläche (5) durch eine am Ende der aus einem Elastomer bestehenden Dichtlippe (4) angeordnete, die Welle (6) umfassende Dichtwulst (7) und einen daran anschließenden, mit den Rückförderrillen (21) versehenen, die Leckageflüssigkeit zurück haltenden oder zurück fördernden Oberflächenabschnitt (9) besteht, wobei die Rückförderrillen (21) hydrodynamisch wirken und das am Oberflächenabschnitt (9) angeordnete Gewinde (24) über eine Auslaufstrecke von ¼ bis ½ des Umfangs der Dichtwulst (7) stetig abflachend in der Dichtwulst (7) ausläuft.

2. Anordnung nach Anspruch 1, **dadurch gekennzeichnet, dass** das Gewinde (24) mit nach Innen gerichteten Schneidspitzen (22) ausgebildet ist.

3. Anordnung nach Anspruch 1 oder 2, **dadurch gekennzeichnet, dass** die Abschlussfläche (10) der Dichtlippe (4) bei eingebautem Dichtelement (3) zur Oberfläche (12) der Welle (6) einen Winkel α bildet, der zwischen 80° und 100° liegt.

4. Anordnung nach einem der Anspruch 1 bis 3 **dadurch gekennzeichnet, dass** die Dichtfläche (5) der Dichtlippe (4) bei eingebautem Dichtelement (3) zur Oberfläche (12) der Welle (6) einen Winkel β bildet, der zwischen 0° und 20° beträgt.

5. Anordnung nach einem der Ansprüche 1 bis 4, **dadurch gekennzeichnet, dass** die Berührbreite (A) der Dichtwulst (7) an der engsten Stelle (25) der Dichtwulst (7) 0,1 mm bis 0,8 mm beträgt.

6. Anordnung nach Anspruch 5, **dadurch gekennzeichnet, dass** die Berührbreite (A) der Dichtwulst (7) an ihrer engsten Stelle (25) auf der Welle (6) 0,1 mm beträgt.

7. Anordnung nach Anspruch 6, **dadurch gekennzeichnet, dass** die Berührbreite (A) der Dichtwulst (7) an ihrer engsten Stelle (25) auf der Welle (6) bis zu 0,8 mm beträgt.

8. Anordnung nach einem der Ansprüche 1 bis 7, **dadurch gekennzeichnet, dass** die Dralltiefe (T) des Gewindes (24) 0,46 bis 0,67 der Dichtlippendicke (d) beträgt.

9. Anordnung nach einem der Ansprüche 1 bis 8, **dadurch gekennzeichnet, dass** die Berührbreite (A) der Dichtwulst (7) im umgekehrten Verhältnis zur Dralltiefe (T) steht, so dass der kleineren Berührbreite (A) die größere Dralltiefe (T) zugeordnet ist und umgekehrt der größeren Berührbreite (A) die kleinere Dralltiefe (T).

10. Anordnung nach einem der Ansprüche 1 bis 9, **dadurch gekennzeichnet, dass** die Überdeckung (U) der Dichtfläche (5) auf der Welle (6) 3% bis 10% des Wellendurchmessers (D) beträgt.

11. Anordnung nach einem der Ansprüche 1 bis 10, **dadurch gekennzeichnet, dass** der Versatz (C) der Mittelline (28) der Dichtlippe (4) zur Mittelline (29) der Welle (6) 0,05 mm bis 0,3 mm beträgt.

12. Anordnung nach einem der Ansprüche 1 bis 11, **dadurch gekennzeichnet, dass** das Dichtelement (3) eine Staublippe (23) hat.

## Claims

1. Arrangement with a housing (31), a shaft (6) and a radial shaft sealing ring (1) with a supporting ring (2) and a sealing element (3) which is attached thereto by vulcanization, is composed of an elastomeric material and has a sealing lip (4) with a single-start thread (24) as return grooves (21), wherein, when the sealing ring (1) is not installed, the sealing lip (4) protrudes from the supporting ring (2) in the radial direction and, when installed in a housing opening with its angled sealing surface (5) under prestress, surrounds the shaft (6), wherein, when the sealing element (3) is installed, the end surface (10) of the sealing lip (4) is directed towards the interior space (11) to be sealed off in the housing, **characterized in that** the sealing surface (5) consists by a sealing bead (7) which is arranged at the end of the sealing lip (4) composed of an elastomer and surrounds the shaft (6) and a surface portion (9) which adjoins said sealing bead, is provided with the return grooves (21), and retains or conveys back the leakage liquid, wherein the return grooves (21) act hydrodynamically, and the thread (24) arranged on the surface portion (9) peters out in a continuously flattening manner in the sealing bead (7) over a petering-out extent of one quarter to one half of the circumference of the sealing bead (7).

2. Arrangement according to Claim 1, characterized on that the thread (24) is designed with inwardly directed cutting points (22).

3. Arrangement according to Claim 1 or 2, **characterized in that**, when the sealing element (3) is installed, the end surface (10) of the sealing lip (4) forms an angle α, which is between 80° and 100°, with respect to the surface (12) of the shaft (6).

4. Arrangement according to one of Claims 1 to 3, **characterized in that**, when the sealing element (3) is installed, the sealing surface (5) of the sealing lip (4) forms an angle β, which is between 0° and 20°, with respect to the surface (12) of the shaft (6).

5. Arrangement according to one of Claims 1 to 4, **characterized in that** the contact width (A) of the sealing bead (7) is 0.1 mm to 0.8 mm at the narrowest point (25) of the sealing bead (7).

6. Arrangement according to Claim 5, **characterized in that** the contact width (A) of the sealing bead (7) at its narrowest point (25) on the shaft (6) is 0.1 mm.

7. Arrangement according to Claim 6, **characterized in that** the contact width (A) of the sealing bead (7) at its narrowest point (25) on the shaft (6) is up to 0.8 mm.

8. Arrangement according to one of Claims 1 to 7, **characterized in that** the helical groove depth (T) of the thread (24) is 0.46 to 0.67 of the sealing lip thickness (d).

9. Arrangement according to one of Claims 1 to 8, **characterized in that** the contact width (A) of the sealing bead (7) is in inverse proportion to the helical groove depth (T), and therefore the greater helical groove depth (T) is assigned to the smaller contact width (A) and, conversely, the smaller helical groove depth (T) is assigned to the greater contact width (A).

10. Arrangement according to one of Claims 1 to 9, **characterized in that** the overlap (U) of the sealing surface (5) on the shaft (6) is 3% to 10% of the shaft diameter (D).

11. Arrangement according to one of Claims 1 to 10, **characterized in that** the offset (C) of the centre line (28) of the sealing lip (4) with respect to the centre line (29) of the shaft (6) is 0.05 mm to 0.3 mm.

12. Arrangement according to one of Claims 1 to 11, **characterized in that** the sealing element (3) has a dust lip (23).

## Revendications

1. Agencement avec un carter (31), un arbre (6) et une bague à lèvre radiale (1) avec une bague d'appui (2) et un élément d'étanchéité (3) accolé à celle-ci par vulcanisation en une matière élastomère qui a une lèvre d'étanchéité (4) avec un filetage (24) d'entrée en tant que rainure de renvoi (21), lorsque la bague d'étanchéité (1) n'est pas montée, la lèvre d'étanchéité (4) saillant en direction radiale à partir de la bague d'appui (2) et lorsqu'elle est montée dans un orifice du carter, entourant sous précontrainte l'arbre (6) par sa surface d'étanchéité (5) coudée, lorsque l'élément d'étanchéité (3) est monté, la surface de terminaison (10) de la lèvre d'étanchéité (4) étant dirigée vers l'espace intérieur (11) qui doit être étanchéifié du carter, **caractérisé en ce que** la surface d'étanchéité (5) est constituée par un bourrelet d'étanchéité (7) placé sur l'extrémité de la lèvre d'étanchéité (4) constituée d'un élastomère, entourant l'arbre (6), et d'un segment de surface (9) qui s'y raccorde, muni des rainures de retour (21), retenant ou renvoyant le liquide de fuite, les rainures de retour (21) ayant un effet hydrodynamique et le filetage (24) placé sur le segment de surface (9) se terminant dans le bourrelet d'étanchéité (7) en s'aplatissant en continu sur un tronçon de sorte de 1/4 à 1/2 de la périphérie du bourrelet d'étanchéité (7).

2. Agencement selon la revendication 1, **caractérisé en ce que** le filetage (24) est conçu avec des pointes coupantes (22) dirigées vers l'intérieur.

3. Agencement selon la revendication 1 ou la revendication 2, **caractérisé en ce que** lorsque l'élément d'étanchéité (3) est monté, la surface de terminaison (10) de la lèvre d'étanchéité (4) forme en direction de la surface (12) de l'arbre (6) un angle α qui se situe entre 80° et 100°.

4. Agencement selon l'une quelconque des revendications 1 à 3, **caractérisé en ce que** lorsque l'élément d'étanchéité (3) est monté, la surface d'étanchéité (5) de la lèvre d'étanchéité (4) forme en direction de la surface (12) de l'arbre (6) un angle β qui se situe entre 0° et 20°.

5. Agencement selon l'une quelconque des revendications 1 à 4, **caractérisé en ce qu'**à l'endroit (25) le plus étroit du bourrelet d'étanchéité (7), la largeur de contact (A) du bourrelet d'étanchéité (7) est de 0,1 mm 0,8 mm.

6. Agencement selon la revendication 5, **caractérisé en ce qu'**à son endroit (25) le plus étroit sur l'arbre (6), la largeur de contact (A) du bourrelet d'étanchéité (7) est de 0,1 mm.

7. Agencement selon la revendication 6, **caractérisé en ce qu'**à son endroit (25) le plus étroit sur l'arbre (6), la largeur de contact (A) du bourrelet d'étanchéité (7) est de jusqu'à 0,8 mm.

8. Agencement selon l'une quelconque des revendications 1 à 7, **caractérisé en ce que** la profondeur de vrille (T) du filetage (24) est de 0,46 à 0,67 de l'épaisseur (d) de la lèvre d'étanchéité.

9. Agencement selon l'une quelconque des revendications 1 à 8, **caractérisé en ce que** la largeur de contact (A) du bourrelet d'étanchéité (7) est en rapport inverse à la profondeur de vrille (T), de sorte qu'à la plus petite largeur de contact (A) est associée la plus grande profondeur de vrille (T) et inversement, à la plus grande largeur de contact (A) est associée la plus petite profondeur de vrille (T).

10. Agencement selon l'une quelconque des revendications 1 à 9, **caractérisé en ce que** le recouvrement (U) de la surface d'étanchéité (5) sur l'arbre (6) correspond à de 3 % à 10% diamètre (D) de l'arbre.

11. Agencement selon l'une quelconque des revendications 1 à 10, **caractérisé en ce que** le déport (C) de la ligne médiane (28) de la lèvre d'étanchéité (4) par rapport à la ligne médiane (29) de l'arbre (6) est de 0,05 mm à 0,3 mm.

12. Agencement selon l'une quelconque des revendications 1 à 11, **caractérisé en ce que** l'élément d'étanchéité (3) a une lèvre anti-poussière (23).
